# EUROPÄISCHE PATENTSCHRIFT

(11) **EP 0 994 165 B1**
(45) Veröffentlichungstag und Bekanntmachung des Hinweises auf die Patenterteilung: **15.12.2004**
(21) Anmeldenummer: 99117863.3
(22) Anmeldetag: 10.09.1999
(51) Int. Cl.: C09D 11/00, C09D 11/02

(54) **Farbmischungen**
Dyes mixture
Mélange de colorants

(30) Priorität: 13.10.1998 DE 19847011
(43) Veröffentlichungstag der Anmeldung: 19.04.2000
(73) Patentinhaber: Degussa AG, 40474 Düsseldorf (DE)
(72) Erfinder: Stübbe, Andreas, 63739 Aschaffenburg (DE); Göbel, Thomas, Dr., 63457 Hanau (DE); Lortz, Wolfgang, Dr., 63607 Wächtersbach (DE); Glaum, Holger, Dr., 63477 Maintal (DE)

(56) Entgegenhaltungen:
- WO-A-99/48988
- US-A- 5 275 647
- DATABASE WPI Section Ch, Week 199819 Derwent Publications Ltd., London, GB; Class A97, AN 1998-213025 XP002123418 & JP 10 060348 A (RICOH KK), 3. März 1998 (1998-03-03)
- PATENT ABSTRACTS OF JAPAN vol. 1996, no. 01, 31. Januar 1996 (1996-01-31) & JP 07 242093 A (MITSUBISHI PENCIL CO LTD), 19. September 1995 (1995-09-19)

## Beschreibung

Die Erfindung betrifft eine Farbmischung, ein Verfahren zu ihrer Herstellung sowie ihre Verwendung.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen, deren Ablenkung elektronisch steuerbar ist, aus einer Düse auf ein Empfangsmaterial gespritzt. Diese Technik, die auch als druckloses Drucken bezeichnet wird, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel. Es wird relativ preiswert und wird deshalb auch im Computerdruck, zum Beispiel als Arbeitsplatzdrucker, verwendet.

Zunehmend kommt das Ink-Jet-Verfahren auch im industriellen Bereich, zum Beispiel in der Außenwerbung, zur Anwendung. In der Außenwerbung muß die Tinte besondere Anforderungen in Bezug auf die Lichtechtheit und die Wasserbeständigkeit erfüllen. Darüber hinaus müssen die farbgebenden Substanzen sehr feinteilig sein, damit die Druckdüsen nicht verstopfen. Als farbgebende Substanzen werden sowohl Farbstoffe als auch Pigmente verwendet. Letztere haben gegenüber Farbstoffen den Vorteil, daß die Lichtechtheit sehr hoch ist, und daß sie wasserbeständig sind. Einen Überblick über die in Ink-Jet-Tinten verwendeten Pigmente und Farbstoffe gibt die Patentschrift US-A 5,085,698.

Pigmente haben den Nachteil gegenüber wasserlöslichen Farbstoffen, daß sie nur aufgrund einer Behandlung mit oberflächenaktiven Substanzen (Tensiden) stabile Dispersionen mit einer hohen Lagerbeständigkeit bilden.

Nach dem jetzigen Stand der Technik sind Ink-Jet-Tinten nur bedingt wasserfest und damit in der Außenwerbung nicht ohne weiteres einsetzbar.

Es sind Vorschläge, um die Wasserfestigkeit von Ink-Jet-Tinten zu verbessern, bekannt. So werden für die Stabilisierung von Pigmenten in einer Dispersion ionische oder nichtionische Tenside eingesetzt. Hierzu können wasserlösliche Polymere, deren Konzentration maximal 10 %, bezogen auf die Endformulierung der Ink-Jete-Tinte (siehe EP 0 781 819 A2), beträgt, verwendet werden.

Aus JP 100 60 348 sind Tintenzusammensetzungen bekannt, die einen Farbstoff, eine organische Siliciumverbindung der Formel (R₁)ₘ-Si(R₂)ₙ-(X)₄₋ₘ₋ₙ , wobei R₁ eine Carboxyl-, Amino- oder Hydroxyl-Gruppe am Kettenende enthält, R₂ H, Cl, C₁-C₁₆-Kohlenwasserstoff ist, X eine hydrolysierbare Gruppe ist, m = 1,2 und n = 0,1 ist, und eine organische Siliciumverbindung der Formel (R₃)ₚ-Si(R₄)_{q}-(Y)_{4-p-q}, wobei R₃ eine Epoxyd-Gruppe am Kettenende enthält, R₄ H oder C₁-C₁₆-Kohlenwasserstoff ist, Y eine hydrolisierbare Gruppe ist und p = 1,2 ist, enthalten.

In WO 95/04109 wird zur Pigmentstabilisierung die Verwendung von Cyclopolymeren, deren Reste aus einer hydrophilen und einer hydrophoben Gruppe bestehen, beschrieben. Die hydrophobe Gruppe trägt durch die wasserabweisende Wirkung zur Verbesserung der Wasserbeständigkeit bei. Polymere haben aber den Nachteil, daß sie die Viskosität der Ink-Jet-Farbe stark erhöhen. Ink-Jet-Tinten müssen aber sehr niedrig viskos sein, damit die Tinte spritzfähig bleibt. Der Einsatz von Polymeren ist damit stark eingeschränkt.

In WO 97/47698 wird zur Verbesserung der Wasserbeständigkeit eine Oberflächenmodifikation von Pigmentruß mit silanisierten hydrophoben Kieselsäuren beschrieben. Dabei wird die Kieselsäure in den Rußreaktor eingesprüht. Die Reaktortemperaturen liegen bei etwa 1.800 °C, wodurch das Hydrophobierungsmittel thermisch zersetzt wird und weitgehend seine Wirkung verliert.

In US-A 5,618,338 wird eine reaktive Zweikomponent-Tinte und ein entsprechender Druckkopf beschrieben. Die Komponenten, Farbe plus kationische Substanz, reagieren zu einer Tinte, die eine verbesserte Wasserfestigkeit aufweist. Die Laminierung nicht wasserfester Tinten ist weit verbreitet. Der Nachteil der zuletzt genannten bekannten Verfahren besteht darin, daß sie sehr aufwendig sind.

Es besteht somit die Aufgabe, die Wasserbeständigkeit von Ink-Jet-Tinten zu verbessern, wobei die Nachteile des Standes der Technik vermieden werden.

Gegenstand der Erfindung ist eine Farbmischung, welche dadurch gekennzeichnet ist, daß sie mindestens ein Octyltriethoxysilan oder Hexadicyltrimethoxysilan enthält. Das Silan kann einer Vorstufe zur Herstellung der wäßrigen Farbmischung oder der fertigen wäßrigen Farbmischung zugesetzt werden.

Die Organosiliciumverbindung kann in der Farbmischung in einer Konzentration von 0,1 bis 15 Gew.-%, vorzugsweise 0,5 bis 2,5 Gew.-% eingesetzt werden.

Insbesondere kann man die Organosiliciumverbindungen in Form von wäßrigen Emulsionen einsetzen, die bis 75 Gew.-%, insbesondere von 1 bis 50 Gew.-%, mindestens eines Alkoxysilans der allgemeinen Formel 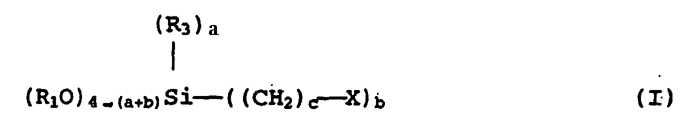 in der bedeuten:
- R₁:: C₁―C₃-Alkyl,
- R₃:: C₁―C₂₀-Alkyl, geradkettig oder verzweigt, insbesondere C₁―C₁₀-Alkyl, Phenyl,
- X:: H, Cl, Br, J, NH₂, SCN, CN, N₃⁻, NHR, NR₂, NR₃, ―Sₓ―, Aryl, Alkenyl, insbesondere H, Cl,
- a:: 0,1,
- b:: 1,2, wobei a + b bevorzugt gleich 1 oder 2 ist,
- c:: eine ganze Zahl von 1 bis 6
und 1 bis 20 Gew.-%, vorzugsweise 1 bis 5 Gew.-%, einer Organosiliciumverbindung der allgemeinen Formel 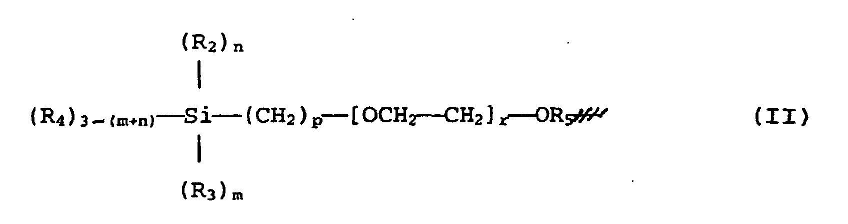 in der bedeuten:
- R₂, R₃:: gleich oder verschieden, C₁―C₂₀-Alkyl, geradkettig oder verzweigt, insbesondere C₁―C₁₀-Alkyl, Phenyl,
- R₄:: C₁―C₃-Alkoxy,

―[OCH₂―CH₂]ᵣ―OR₅,

jedoch maximal einmal,
- R₅:: H, C₁―C₂₀Alkyl, C₂―C₃₆-Alkenyl, C₅―C₈-Cycloalkyl, C₇―C₃₆-Aralkyl, insbesondere durch Alkylgruppen substituierte Benzylreste und Phenylreste,
- m:: 0, 1, 2,
- n:: 0, 1, 2, mit der Maßgabe, daß (m+n) = 1 oder 2 ist, wenn p = 0 ist, bei p ≠ 0 gilt (m+n) = 0,1 oder 2,
- p:: 0, 1, 2, 3,
- r:: eine ganze Zahl zwischen 1 und 50,
enthält.

Die Verwendung der wäßrigen Emulsion hat den Vorteil, daß die Organosiliciumverbindung bereits in einer sehr fein verteilten Form vorliegt und durch geeignete Tenside stabilisiert ist.

Die Farbmischung kann wasserenthaltend und/oder lösungsmittelhaltig sein.

Beispiel für die in der Farbmischung enthaltende Lösungsmittel können Triethylenglykol; Polyvinylpyrolidon; Methylethylketon; N-Methyl-2-Pyrolidon; 1,3-Propandiol sein.

In einer bevorzugten Ausführungsform der Erfindung kann die Farbmischung eine wäßrige Farbmischung, die eine wäßrige Emulsion eines Silans enthält, sein.

Die wäßrige Farbmischung kann die färbende Komponente in Form eines wasserunlöslichen Pigmentes und/oder in Form eines wasserlöslichen Farbstoffes enthalten.

Als wasserunlösliches Pigment kann bevorzugt Ruß eingesetzt werden.

Die erfindungsgemäße Farbmischung kann weiterhin bekannte Komponenten enthalten. Diese Komponenten sind beispielsweise in der US-A 5,596,027 beschrieben.

Ein weiterer Gegenstand der Erfindung ist ein Verfahren zur Herstellung der Farbmischung, welches dadurch gekennzeichnet ist, daß man zu der gegebenenfalls Tensid enthaltenden wäßrigen Pigmentmischung eine Emulsion des Organosilans zumischt.

Zur Verbesserung der Wasserfestigkeit kann man der Farbmischung hydrophobe Kieselsäuren zusetzen. Diese Kieselsäuren können sowohl auf dem Fällungswege als auch auf dem pyrogenen Wege hergestellt und anschließend auf bekanntem Wege hydrophobiert sein.

Die erfindungsgemäße Farbmischung kann als Druckfarbe und Schreibtinte, insbesondere als Tinte bei dem Ink-Jet-Drucken, eingesetzt werden.

Die erfindungsgemäße Farbmischung weist den Vorteil auf, daß sie eine erhöhte Wasserfestigkeit aufweist. Wassertropfen, die auf die getrocknete Druckfläche auftreffen, perlen sehr stark und dringen nicht in die Farbe ein (Imprägniereffekt).

### Beispiele

Die in den Beispielen 1 - 7 verwendeten Tinten werden folgendermaßen hergestellt:
1. Herstellung einer wäßrigen Rußdispersion, die 15 % Pigment enthält. Zur Stabilisierung werden 7 % (bezogen auf die Gesamtmenge) eines nichtionischen Tensid-Gemisches hinzugegeben. Der Pigmentruß und die zuvor in deionisiertem Wasser gelöste Tensidmischung wird zunächst in einem Ultra-Turrax für 20 min homogenisiert und anschließend in einer Perlmühle dispergiert. Der in der Rußdispersion verwendete Pigmentruß ist Farbruß SW 18, ein Produkt der Degussa AG.
2. Herstellung der Silanemulsion gemäß DE 41 22 263, Seite 7.
3. Wasser, Triethylenglycol und die Silan-Emulsion werden in einem Magnetrührer gemischt und die Rußdispersion zugegeben. Die Einarbeitungszeit beträgt 10 min. In Tabelle 1 sind die Zusammensetzungen der in den Beispielen verwendeten Tinten aufgeführt. Die Pigmentkonzentration beträgt in jedem Beispiel 5 %.

**Tabelle 1**

| (alle Angaben in %) | | | | | | | |
|---|---|---|---|---|---|---|---|
| Beispiel | 1 | 2 | 3 | 4 | 5 | 6 | 7 |
| Rußdispersion | 30,0 | 30,0 | 30,0 | 30,0 | 30,0 | 30,0 | 30,0 |
| Triethylenglycol | 13,5 | 13,5 | 13,5 | 13,5 | 13,5 | 13,5 | 13,5 |
| dest.Wasser | 46,5 | 45,6 | 44,7 | 39,3 | 45,6 | 44,7 | 39,3 |
| Silanemulsion 1 | | 0,9 | 1,8 | 7,2 | | | |
| Silanemulsion 2 | | | | | 0,9 | 1,8 | 7,2 |

Die Silanemulsion 1 enthält 50 % Triethoxyoctylsilan, die Silanemulsion 2 enthält 50 % Triethoxyhexadecylsilan.

Die Tinten werden mit einem Filmaufziehgerät, K Control Coater, Fa. Erichsen, mit einer Naßfilmstärke von 6 µm auf Papier aufgezogen. Die Wasserbeständigkeit wird mittels einem Tropfentest ermittelt. Dabei wird mit einer Einwegspritze vollentsalztes Wasser in Tropfenform auf die gedruckte Fläche aufgetragen. Nach 15, 30, 45 und 60 sec. werden die Tropfen visuell beurteilt, mit dem Finger zur Seite weggewischt und der Abrieb beurteilt.

Es werden zwei handelsübliche, beschichtete Papiere verwendet. Das Papier 1 hat eine sehr kompakte, 50 µm starke Beschichtung und eine sehr glatte Oberfläche. Das Papier 2 hat eine sehr lockere unebene und 5 - 15 µm starke Beschichtung.

### Beispiel 1

- Papier 1:: 15 sec.: der Tropfen penetriert sofort in das Papier, schwacher Abrieb 30 sec.: der Tropfen ist eingetrocknet
- Papier 2:: Ergebnis wie Papier 1

### Beispiel 2

- Papier 1:: 15 sec.: der Tropfen ist flach, verläuft langsam, schwacher Abrieb
30 sec.: wie oben, der Tropfen ist nicht eingetrocknet
45 sec.: wie oben
60 sec.: wie oben
- Papier 2:: Ergebnis wie Papier 1.

### Beispiel 3

- Papier 1:: 15 sec.: der Tropfen ist flach, verläuft langsamer als in Beispiel 2, schwacher Abrieb
30 sec.: wie oben, der Tropfen ist nicht eingetrocknet
45 sec.: wie oben
60 sec.: wie oben
- Papier 2:: Ergebnis: der Tropfenverlauf ist steil, sonst wie Papier 1

### Beispiel 4

- Papier 1:: 15 sec.: der Tropfen ist steil und verläuft nicht, schwacher Abrieb
30 sec.: wie oben
45 sec.: der Tropfen dringt leicht in die Farbschicht ein, schwacher Abrieb 60 sec.: wie oben
- Papier 2:: Ergebnis wie Papier 1

### Beispiel 5

- Papier 1:: 15 sec.: der Tropfen ist steil, dringt nicht in die Farbschicht ein, schwacher Abrieb
30 sec.: der Tropfen dringt leicht in die Farbschicht ein, schwacher Abrieb
45 sec.: der Tropfen dringt stärker in die Farbschicht ein, schwacher Abrieb 60 sec.: wie oben
- Papier 2:: der Tropfen dringt erst nach 45 sec. in die Farbschicht ein, sonst wie oben

### Beispiel 6

- Papier 1:: wie Beispiel 5

### Beispiel 7

- Papier 1:: 15 sec.: der Tropfen ist steil, dringt nicht in die Farbschicht ein, schwacher Abrieb
30 sec.: der Tropfen dringt leicht in die Farbschicht ein, schwacher Abrieb
45 sec.: wie oben
60 sec.: wie oben'
- Papier 2:: der Tropfen dringt erst nach 45 sec. in die Farbschicht ein, sonst wie oben

Die erfindungsgemäße Farbmischung, die eine Organosilanemulsion enthält, zeigt eine deutliche Verzögerung des Eindringens des Wassertropfens in die Farbschicht. Das Silan Triethoxyhexadecylsilan hat ein deutlich besseres wasserabweisendes Verhalten als das Silan Triethoxyoctylsilan. Der Einfluß der Papierbeschichtung ist gering.

In den Beispielen 8 - 10 wird eine hydrophobe pyrogen hergestellte Kieselsäure der Ink-Jet-Tinte zugegeben.

**Tabelle 2**

| (alle Angaben in %) | | | |
|---|---|---|---|
| Beispiel | 8 | 9 | 10 |
| Rußdispersion | 33,3 | 33,3 | 33,3 |
| Isopropanol | 20,0 | 20,0 | 20,0 |
| dest. Wasser | 56,7 | 56,2 | 55,7 |
| Aerosil R 972 | | 0,5 | 1,0 |

Mit einer Konzentration von 1 % hydrophober pyrogen hergestellter Kieselsäure dringt der Wassertropfen nicht mehr in die Farbschicht ein. Es wird eine deutliche Verbesserung der Wasserbeständigkeit erzielt. Auf Papier 2 ist der Effekt stärker als auf Papier 1 ausgeprägt.

In den Beispielen 11 -18 werden lösemittelhaltige Systeme untersucht. In diesen Formulierungen werden keine wäßrigen Silanemulsionen eingesetzt. SI 108 und SI 116 lassen sich gut in den verwendeten Lösungsmitteln lösen.

**Tabelle 3**

| (alle Angaben in %) | | | | | | | | |
|---|---|---|---|---|---|---|---|---|
| Beispiel | 11 | 12 | 13 | 14 | 15 | 16 | 17 | 18 |
| Farbruß FW 18 | 5,0 | 5,0 | 5,0 | 5,0 | 5,0 | 5,0 | 5,0 | 5,0 |
| Polyvinylpyrrolidon | 4,0 | 4,0 | 4,0 | 4,0 | 4,0 | 4,0 | 4,0 | 4,0 |
| Methylethylenketon | 16,0 | 30,0 | 30,0 | 30,0 | 30,0 | 30,0 | 30,0 | 30,0 |
| Triethylenglykol | 40,0 | 30,0 | 29,5 | 28,0 | 26,0 | 29,5 | 28,0 | 28,0 |
| N-Methyl-2-Pyrrolidon | 20,0 | 20,0 | 20,0 | 20,0 | 20,0 | 20,0 | 20,0 | 20,0 |
| 1,3 Propandiol | 15,0 | 11,0 | 11,0 | 11,0 | 11,0 | 11,0 | 11,0 | 11,0 |
| Silan SI 108 | | | 0,5 | 2,0 | 4,0 | | | |
| Silan SI 116 | | | | | | 0,5 | 2,0 | 4,0 |
| Silan SI 108: Octyltrimethoxysilan Silan SI 116: Hexadecyltrimethoxysilan | | | | | | | | |

### Beispiel 11

- 15 sec.:: der Tropfen verläuft stark, schwacher Abrieb
- 30 sec.:: wie oben
- 45 sec.:: der Tropfen verläuft stärker, schwacher Abrieb
- 60 sec.:: wie oben

### Beispiel 12

- 15 sec.:: der Tropfen verläuft nicht und bleibt rund, schwacher Abrieb
- 30 sec.:: der Tropfen verläuft leicht, sonst wie oben
- 45 sec.:: wie oben
- 60 sec.:: der Tropfen verläuft leicht, etwas flacher, schwacher Abrieb

### Beispiel 13

- 15 sec.:: der Tropfen verläuft nicht bleibt rund und kugelig, schwacher Abrieb
- 30 sec.:: wie oben
- 45 sec.:: der Tropfen verläuft leicht, sonst wie oben
- 60 sec.:: wie oben

### Beispiel 14

- 15 sec.:: der Tropfen verläuft nicht, bleibt rund und kugelig, schwacher Abrieb
- 30 bis 60 sec.:: wie oben

### Beispiel 15

- 15 sec.:: der Tropfen verläuft nicht, bleibt rund und kugelig, schwacher Abrieb
- 30 bis 60 sec.:: wie oben

### Beispiel 16 bis 18

### wie Beispiel 15

Octyltrimethoxysilan zeigt ab einer Zugabemenge von 2 % gute wasserabweisende Eigenschaften. Hexadecyltrimethoxysilan ist schon ab einer Zugabemenge von nur 0,5 % gut und damit hervorragend geeignet.

## Patentansprüche

1. Farbmischung, **dadurch gekennzeichnet, daß** sie mindestens ein Octyltriethoxysilan oder Hexadecyltrimethoxysilan enthält.

2. Farbmischung nach Anspruch 1, **dadurch gekennzeichnet, daß** sie ein hydrophobes, auf pyrogenem Wege hergestelltes Siliciumdioxid enthält.

3. Verfahren zur Herstellung der Farbmischung nach Anspruch 1 oder 2, **dadurch gekennzeichnet, daß** man zu der gegebenenfalls Tensid enthaltenden wäßrigen Pigmentmischung eine Emulsion des Organosilans und gegebenenfalls ein hydrophobes, auf pyrogenem Wege hergestelltes Siliciumdioxid zumischt.

4. Verwendung der Farbmischung nach Anspruch 1 oder 2 als Druckfarbe, insbesondere als Tinte bei dem Ink-Jet-Drucken, sowie als Schreibtinte.

## Claims

1. Ink mixture, **characterised in that** it contains at least one octyl triethoxysilane or hexadecyl trimethoxysilane.

2. Ink mixture according to claim 1, **characterised in that** it contains a hydrophobic silicon dioxide produced pyrogenically.

3. Process for producing the ink mixture according to claim 1 or 2, **characterised in that** an emulsion of the organosilane and optionally a hydrophobic silicon dioxide produced pyrogenically are added to the aqueous pigment blend which optionally contains surfactant.

4. Use of the ink mixture according to claim 1 or 2 as a printing ink, in particular as an ink for ink jet printing, and as a writing ink.

## Revendications

1. Mélange colorant.
**caractérisé en ce qu'**
il contient au moins un octyltriéthoxysilane ou un hexadécyltriméthoxysilane.

2. Mélange colorant selon la revendication 1,
**caractérisé en ce qu'**
il contient un dioxyde de silicium hydrophobe produit par voie pyrogène.

3. Procédé de production du mélange colorant selon la revendication 1 ou 2,
**caractérisé en ce qu'**
on ajoute au mélange de pigment aqueux contenant le cas échéant un agent tensioactif, une émulsion d'organo-silane et le cas échéant un dioxyde de silicium hydrophobe produit par voie pyrogène.

4. Utilisation du mélange de colorants selon la revendication 1 ou 2 comme encre d'impression, en particulier comme encre dans les impressions à jet d'encre, ainsi que comme encre d'écriture.
